# EUROPEAN PATENT APPLICATION

(11) **EP 3 103 710 A1**
(43) Date of publication of application: **14.12.2016**
(21) Application number: 15171604.0
(22) Date of filing: 11.06.2015
(51) Int. Cl.: B62H 5/06

(54) **ARRANGEMENT AND METHOD FOR SECURING A WHEELED VEHICLE AGAINST THEFT**

(71) Applicant: HN Conculting Schweiz GmbH, 8200 Schaffhausen (CH)
(72) Inventor: Lindved, Per, 2625 Vallensbæk (DK)
(74) Representative: Holme Patent A/S

(57) **Abstract**

A locking arrangement serves for securing a wheeled vehicle (1) against being stolen. The arrangement comprises an upper mounting part (8) connected to the front tube (6) of the frame (5) of the vehicle (1), a lower mounting part (9) connected to the turnable axle (4) of the handlebars (2) of the vehicle (1), a mounting housing (10) placed on the upper mounting part (8), an adjusting pin (12) in the mounting housing (10), and a recess (17) in the lower mounting part (9) cooperating with the adjusting pin (12) in such a way that the vehicle (1) comes in the non-riding mode when the adjusting pin (12) does engage the recess (17) and in the riding mode when the adjusting pin (12) does not engage the recess (17. The pin (12) and/or the recess (17) are formed with means for generating resistance against turning the handlebars (2) so that a thief cannot ride away with the vehicle.

## Description

The invention relates to a locking arrangement for securing a vehicle having a least two wheels, such as a two-wheeled vehicle, e.g. a bicycle, against being stolen. The locking arrangement comprises an upper mounting part connected to a front tube of the frame of the vehicle, a lower mounting part connected to a turnable axle of the handlebars of the vehicle, a mounting housing on the upper mounting part, an adjusting pin, which is arranged displaceable up and down in the mounting housing, and adjusting means, which is formed in the lower mounting part and is cooperating with the adjusting pin in the mounting housing in such a way that the vehicle is in the non-riding mode when the adjusting pin engages the adjusting means, and in the riding mode when the adjusting pin does not engage the adjusting means.

A locking arrangement for a bicycle is known from the International Patent Application no. WO 96/26102 of the present inventor.

For this known locking arrangement the upper and lower mounting parts is locked together simply by displacing the lock pin from its upper position to its lower position in which the lock pin engages bores formed in both mounting parts. The downside of this known locking arrangement is that a thief intentionally can unlock an already locked bicycle simply by from below knocking up the lock pin of at least the lower bore.

These and other disadvantages of the prior art safeguarding by using locking arrangements for a wheeled vehicle such as a bicycle are according to the invention remedied by,
in a first aspect of the invention providing a locking arrangement of the kind mentioned in the opening paragraph which provides greater safety against stealing a two-wheeled vehicle, such a bicycle, than hitherto known,
in a second aspect of the invention providing a locking arrangement of the kind mentioned in the opening paragraph which provides great safety against being broken up, and
in a third aspect of the invention providing a locking arrangement of the kind mentioned in the opening paragraph which makes it comfortable to use a wheeled vehicle, such as a bicycle,
in a fourth aspect of the invention providing a locking arrangement of the kind mentioned in the opening paragraph which is specifically adapted for being attached to the wheeled vehicle in relation to the front tube or front fork of said wheeled vehicle without obstructing the turnability of the handlebars, and thus of the front wheel.

The novel and unique features whereby these and other aspects are achieved according to the present invention consist in that at least parts of the surfaces of the adjusting pin and/or the adjusting means are touching each other when the adjusting pin is engaging the adjusting means, and that said surface parts are formed with means for generating resistance when the adjusting pin and the adjusting means are turned in relation to each other.

In the context of the present invention a "vehicle having a least two wheels" means any vehicle, motorised or not, having a front wheel and at least one rear wheel. An exemplary preferred vehicle is a human-powered, an electrically powered, an engine powered or pedal-driven vehicle, having two wheels attached to a frame, one behind the other. The front tube of such a vehicle is turnable by turning the handlebars in relation to the front fork and/or front tube, which allows said the front fork and/or front tube to turn smoothly for steering and balance. The locking arrangement of the present invention can be arranged inserted between the front fork and the front tube in association with bearings that facilitates the turning operation. The locking arrangement serves as a "handlebars locking arrangement" that prevent the handlebars from turning in some positions, e.g. parking positions, and allows the handlebars to turn in other positions, e.g. riding positions. The vehicle of the invention is not limited to a conventional bicycle. Thus the locking arrangement can be mounted on any vehicle where the plane of the rotation of the front wheel can be turned, which turning is associated with the presence of a turning means such as e.g. a ball bearing or roller bearing. Vehicles suited for implementing the locking arrangement according to the present invention include but is not limited to e.g. carrier cycles, Christiania cycle, E-Bikes, and vehicles having more than one rear wheel.

The lower mounting part of the locking arrangement may be said to be the stationary part in relation to the upper mounting part when the turning takes place. The upper mounting part and the lower mounting part are cooperating in a manner so that the lower mounting part is allowed to turn in relation to the upper mounting part about the axis of the axle of the handlebars while the adjusting pin at the same time is engaging the adjusting means. When the touching surface parts of the engaging adjusting pin and the adjusting means are turned in relation to each other the means formed on said surfaces for generating resistance parts generates a friction force or resistance that the rider has no problem of overcoming when riding, but is substantial when the vehicle is parked and the locking arrangement is locked in the non-riding position.

The vehicle cannot be stolen since it is practically impossible to handle a vehicle locked in this way, which makes the vehicle less vulnerable when exposed to a thief. Due to the problems of rolling a vehicle if the front wheel and the rear wheel are arranged in different planes due to the locking arrangement of the present invention a thief will be very visible in the public area and will renounce on stealing the vehicle. Even if the front wheel and the rear wheel are locked in the same plane the handlebars cannot be turned, which also will deprive the thief of the motivation to bring along a locked vehicle.

The thief will not be able to keep his/her balance when riding on the locked vehicle because the required normal turning of the handlebars cannot take place without overcoming the force of the means for generating resistance with the required speed. Due to the locking arrangement of the present invention the thief now all the time needs to overcome the predetermined large resistance generated during the turning process needed during riding and navigating the vehicle, and that is simply not possible.

It is on the other hand a great advantage that the handlebars goes tight when being turned since the owner then can set his/her two-wheeled vehicle straight away on a place without any racks, and in a stable position in which the handlebars are turned a suitable angle.

In a preferred embodiment the adjusting means can be a curved recess formed in the lower mounting part with the centre of the curve situated on the axis of the turnable axle of the handlebars. In this embodiment the upper and lower mounting parts can cooperate in such a way with each other that the lower mounting part is allowed to turn in relation to the stationary upper mounting part about the axis of the axle of the handlebars while the adjusting pin at the same time is engaging the recess, and the resistance means is generating a resistance against said turning. Such a recess can easily and inexpensively be made in a premade component as an integral part of the lower mounting part as a means for generating resistance. The curvature of the recess may conveniently be selected to be more or less the same as the turning angle of the front tube, thus of the handlebars and the front wheel, when driving. The resistance against turning can be made greater the more the curvature of the recess deviates from the turning curvature that the front tube follows during riding the vehicle, thus when turning the front wheel.

According to the invention can the lower mounting part be a plate with a mainly uniform thickness and the depth of the recess in the plate can be smaller than the thickness of the plate whereby is obtained that the recess has a bottom so that a thief cannot knock the adjusting pin up from below.

The above mentioned means for generating resistance can according to the invention be of many different kinds such as e.g. irregularities, such as rows of elevations and depressions formed in the recess and/or on the adjusting pin, or friction linings placed on the surface of the recess. The resistance means can consist of a row of elevations and depressions formed one after the other on at least one of the side walls of the recess, and/or row of elevations and depressions formed on the bottom of the recess. Combinations of means for generating resistance are within the scope of the present invention.

For example, the lower end of the adjusting pin can according to the invention be spherical and cooperate with resistance generating means, e.g. irregularities, formed on the bottom of the recess.

According to the invention can a spring-loaded ball instead be arranged between the lower end of the adjusting pin and the bottom of the recess to serve to generate the required level of resistance against the turning that allows the rider to ride the vehicle but prevents a thief to carry along the locked vehicle.

Also magnetism can according to the invention be used for generating a resistance against turning the handlebars of the vehicle.

Several different means for generating resistance can be used in combination.

In another embodiment of the present invention can a transverse groove be formed in the lower part of the mounting housing, the lower wall of the groove be a flap, an adjusting bead be formed in the groove, the mounting housing and the upper mounting part be arranged in such a way that the mounting housing can be displaced to and fro on the upper mounting part into the direction of the front tube of the frame of the vehicle, the lower mounting part be formed with a projection with a curved edge fitting into the groove in the mounting housing, the centre of the curve of the edge of the projection be situated on the axis of the axle of the handlebars, the edge of the projection be formed with a row of teeth engaging the bead, and the upper and lower mounting parts be cooperating in such a way that turning the lower mounting part in relation to the upper mounting part generates resistance against the turning.

By means of this arrangement it is possible to either choose a resistance, which is so large that the handlebars is locked to the frame of the vehicle when the mounting house has been displaced on the upper mounting part to a first position close to the front tube of the frame of the vehicle, or to choose a resistance, which is so small, or even zero, that the handlebars freely can be turned when the mounting house has been displaced on the upper mounting part to a second position farther away from the front tube of the frame of the vehicle.

In the first position would the vehicle then be in the non-riding mode or the parking mode, and in the second position in the riding mode, thus in a riding-facilitated non-obstructed mode.

In positions between the first and second positions can the vehicle be in the non-riding mode too when the resistance against turning the handlebars is large enough.

The locking arrangement for the second embodiment may advantageously comprise means as e.g. keys and slots for preventing that the mounting housing turns in relation to the upper mounting part when the mounting housing is displaced on the upper mounting part to and fro the front tube of the frame of the vehicle.

Advantageously the adjusting pin can be eccentrically placed on a lock, an oblong slot can be formed in the upper mounting plate, the adjusting pin can fit into the oblong slot, and a desired position of the mounting housing on the upper mounting plate can be obtained by turning the lock.

The locking arrangement can expediently be arranged so that the mounting housing can be displaced on the upper mounting part between a first position closer to the front tube of the vehicle and a second position farther from the front tube of the vehicle, and be arranged so that the resistance against turning the lower mounting part in relation to the upper mounting part is so large in the first position that a turning process cannot take place and in the second position so small or zero that a turning process freely can take place whereby the vehicle is in the non-riding mode in the first position and in the riding mode in the second position.

The locking arrangement may further comprise a cable lock arrangement as a further safety means to prevent the thief from simply carrying the vehicle away. The cable lock arrangement may include a cable having an end equipped with a lock fitting and an opposite end equipped with a hole for allowing passing of the lock fitting, which lock fitting is adapted for being locked together with the upper mounting plate. Further explanations of the cable lock arrangement and how to use it together with the locking arrangement according to the present invention is described below in relation to the detailed description.

The invention will now be described and explained in greater details below while disclosing further advantageous features and technical effects and describing exemplary embodiments with reference to the drawing, in which
Fig. 1 is a perspective view of a first embodiment of the locking arrangement according to the invention mounted on a two-wheeled vehicle of which is seen only a fragment of the front part of the vehicle,
Fig. 2 is an exploded view of the locking arrangement seen in fig. 1, shown in perspective and in a larger scale,
Fig. 3 shows the assembled locking arrangement according to the invention seen in fig. 2 and shown in a partly offset state,
Fig. 4 shows the same but in a vertical section,
Fig. 5 illustrates a first variant of the locking arrangement according to the invention,
Fig. 6 illustrates a second variant of the locking arrangement according to the invention,
Fig. 7 illustrates a third variant of the locking arrangement according to the invention,
Fig. 8 illustrates a fourth variant of the locking arrangement according to the invention,
Fig. 9 is an exploded view of a second embodiment of the locking arrangement according to the invention, seen in perspective,
Fig. 10 shows the assembled locking arrangement according to the invention seen in fig. 9 and shown in a partly offset state,
Fig. 11 shows the same but seen in a vertical section and in a non-riding mode of the vehicle,
Fig. 12 shows the same as in fig. 11 but in the riding mode of the vehicle,
Fig. 13 is an exploded view of a fragment of a cable lock arrangement according to the invention, seen in perspective, and
Fig. 14 is a perspective view of the assembled cable lock arrangement seen in fig. 13.

In the following detailed description of the invention it is assumed that the two-wheeled vehicle is a bicycle 1. This should by no means be construed as a limiting example.

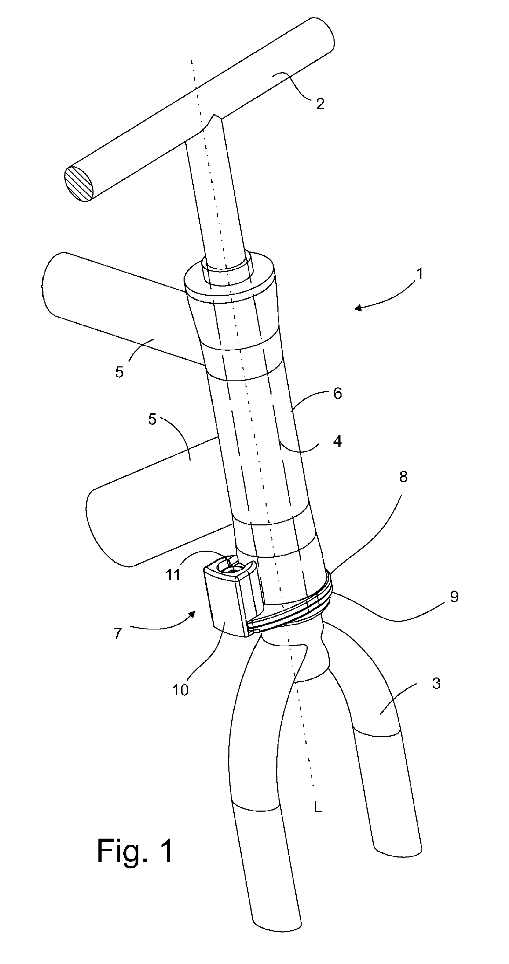

Fig. 1 shows a fragment of the front part of the bicycle 1 comprising handlebars 2 connected to a front fork 3 via a stem 4, and also a frame 5 with a front tube 6 in which the stem 4 is placed turnable.

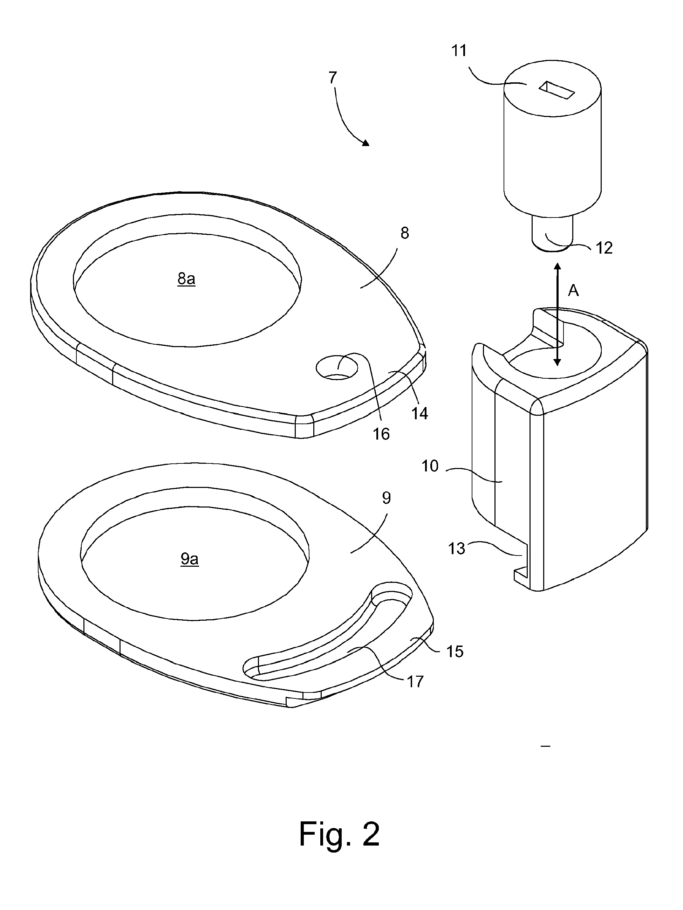

Fig. 2 - 8 show a first embodiment of the locking arrangement 7 according to the invention, which in mounted state functions as a safeguard for preventing theft of the bicycle 1.

The locking arrangement 7 comprises, as it appears from especially fig. 1 - 4, an upper mounting plate 8 for partly mounting the locking arrangement 7 on the front tube 6 of the frame 5 of the bicycle 1 and a lower mounting plate 9 for partly mounting the arrangement 7 on the stem 4 between the handlebars 2 and the front fork 3 of the bicycle 1.

For that purpose is the upper mounting plate 8 equipped with an upper mounting opening 8a fitting to the front tube 6 of the bicycle 1, and the lower mounting plate equipped with a lower mounting opening 9a fitting to the stem 4 of the bicycle 1.

A mounting housing 10 attached to the topside of the upper mounting plate 8 is housing a lock 11 in such a way that the lock 11 can be displaced between an upper and lower position, as indicated by double arrow A. The bottom of the lock 11 has a lock pin 12.

The mounting housing 10 is, as best seen in fig. 2, formed with a transverse groove 13, and the upper mounting plate 8 and the lower mounting plate 9 are formed with each their projections 14 and 15 fitting into the groove 13.

These measures provide an effectively safeguarding against a thief who makes attempts to steal the bicycle 1 by breaking the projections 14, 15 of the mounting plates 8 and 9 apart to be able to ride or pull away the bicycle 1.

As seen best in fig. 2 the upper mounting plate 8 is formed with a through-bore 16 fitting to the lock pin 12, and the lower mounting plate 9 is formed with a curved recess 17, which is accepting the lock pin 12. The curved recess 17 defines a section of a circle having it's centre situated on the axis L of the turnable stem 4 between the handlebars 2 and the front fork 3 of the bicycle 1.

The upper mounting plate 8 therefore is stationary disposed on the bicycle 1 while the lower mounting plate 9 is disposed turnable on the bicycle.

That implies that turning the handlebars 2 of the bicycle 1 an angle will get the lower mounting plate 9 to turn a corresponding angle in relation to the upper mounting plate 8.

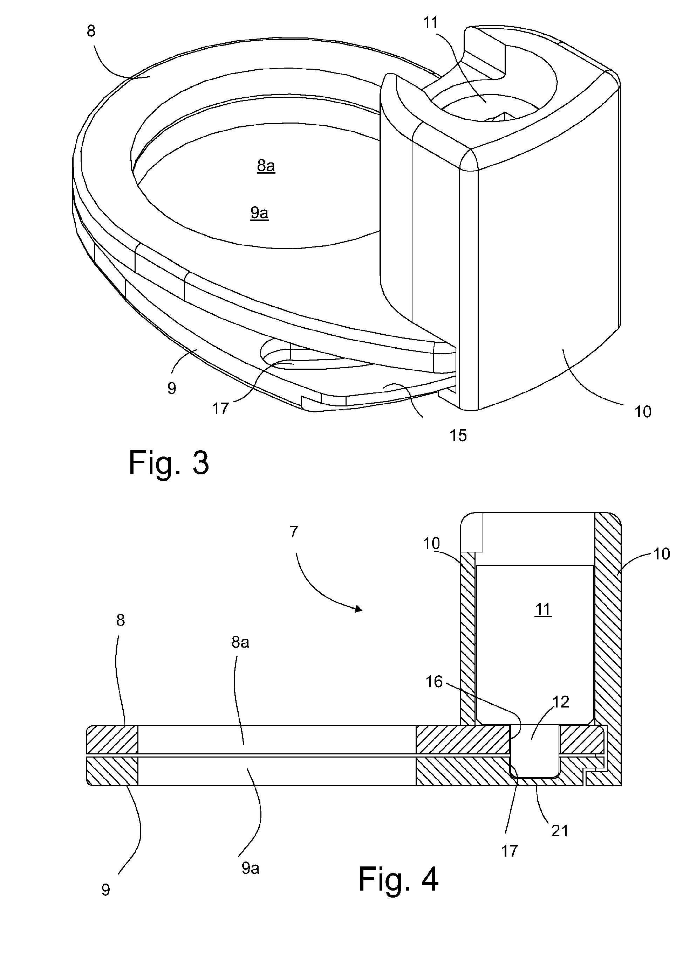

Fig. 4, which is a vertical section of the first embodiment of the locking arrangement 7 according to the invention, shows that said turning of the lower mounting plate 9 in relation to the upper mounting plate 8 implies that the lock pin 12 is engaging the curved recess 17 formed in the lower mounting plate 9 via the through-bore 16 in the upper mounting plate 8 when the lock pin 12 is in its lower position.

That situation corresponds to the situation in which a bicycle is locked by means of the known technique but in this case without actually locking the bicycle when the lock pin 12 and the curved recess 17 are arranged in such a way that the curved recess 17 formed in the lower mounting plate 9 is allowed to turn a desired angle in relation to the stationary lock pin without meeting any resistance.

The object of the invention is however on the contrary to form the lock pin 12 and the curved recess 17 so that turning the curved recess 17 in relation to the lock pin 12 in fact does generate resistance.

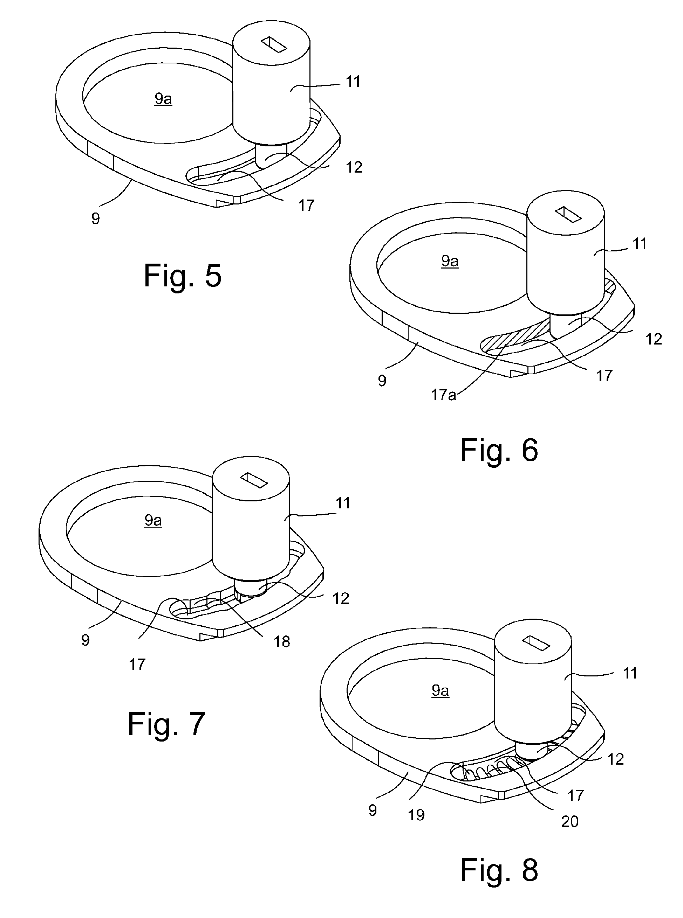

Fig. 5 - 8 illustrate how the generating of resistance takes place. For the sake of clearness these figures show only the lower mounting plate 9 with the curved recess 17 and the lock 11 with the lock pin 12, which via the through-bore 16 in the upper mounting plate 8 is engaging the curved recess 17 formed in the lower mounting plate 9.

In the embodiment seen in fig. 5 the resistance is simply provided by means of magnetism. At least in the areas where the adjusting pin 12 touches the recess 17 the goods around the recess and/or the adjusting pin is/are magnetic but the surfaces of both the pin 12 and the recess 17 are without other mechanical or physical resistance means, such as e.g. irregularities. Thus in the magnetic embodiment the parts of the surfaces of the adjusting pin and/or the adjusting means that are touching each other when the adjusting pin is engaging the adjusting means can be smooth without any topographical alterations, although such are not excluded in combination with magnetic means as the means for generating resistance.

In the embodiment seen in fig. 6 the resistance is provided by means of a friction lining 17a, e.g. a brake lining on more or less of the sides of the recess 17, optionally all over the sides of the recess.

In the embodiment seen fig. 7 the resistance is provided by means of elevations and depressions 18 formed on the sides of the recess 17.

In the embodiment seen fig. 8 the resistance is provided by means of elevations and depressions 18 formed on the bottom of the recess 17. The elevations can e.g. be a row of thin rods 19 fastened to the sides of the recess while the depressions are the gaps 20 between the thin rods 19.

The end face of the pin 12 can moreover be spherical (not seen), or a spring-loaded ball (not seen) can be arranged between the lower end of the pin 12 and the bottom of the recess 17.

The resistance can within the scope of the present invention be provided in other ways. But in all cases the size of the resistance is in accordance with the invention not so large that the handlebars of the bicycle cannot in practise be manually turned. The resistance is on the other hand still so large that it in practise is impossible to ride the bicycle owing to the fact that the thief is not able to operate the bicycle and therefore would give up to ride away with the bicycle.

The thief can however pull along or carry the bicycle away, which however would make him conspicuous and maybe call the attention of the police to the thief. Such operation by the thief is moreover a strenuous task to carry out, and besides that, the thief has no interest in stealing a bicycle, which he anyhow cannot use.

For the owner is it on the other hand a great advantage that the handlebars of the bicycle goes sufficiently tight when being turned since the owner then at once can set the bicycle on a place without any bicycle rack in a stable position in which the handlebars are turned a suitable angle, or be placed in a bicycle rack having a specific demand to angular position of the front wheel

The upper and lower mounting plates 8,9 may within the scope of the present invention be made in many ways, e.g. by machining, which however is a somewhat costly process.

According to the invention the mounting plates 8,9 are however simple flat plates, which advantageously can be manufactured by means of inexpensive operations like e.g. laser cuttings, stamping and punching from inexpensive plate materials, e.g. corrosion-resistant stainless steel.

The depth of the recess 17 in the lower mounting plate 9 is according to the invention furthermore smaller than the thickness of the mounting plate 9 whereby the bottom 21 is formed in the lower mounting plate 9. This bottom 21 in the lower mounting plate 9 effectively prevents a thief from knocking up the lock pin 12 because he/her cannot hit it directly from below. This knocking up operation is in fact possible when using the known locking arrangements.

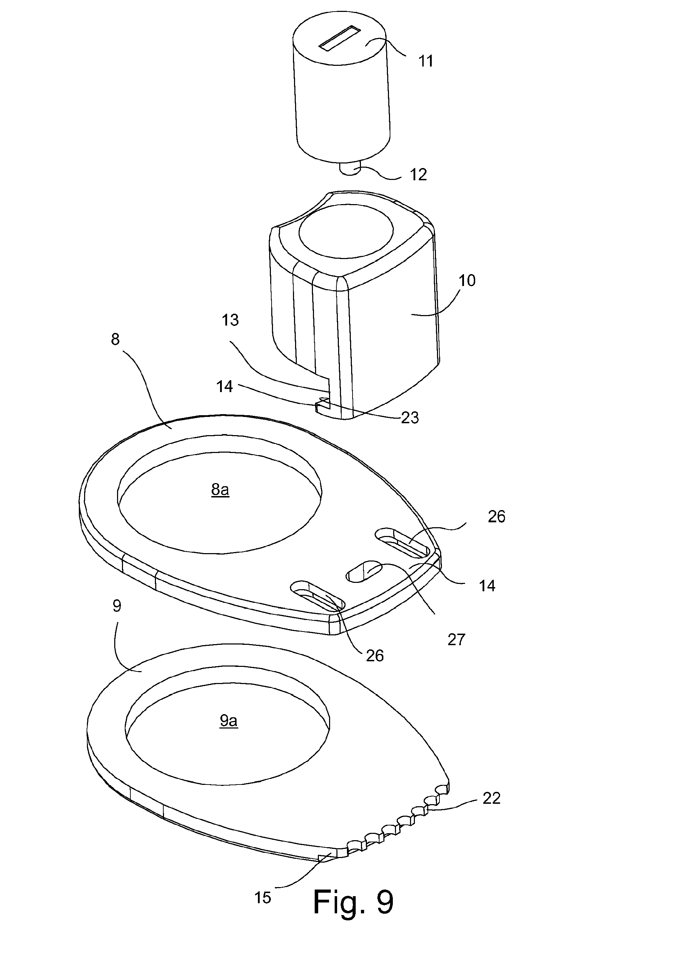

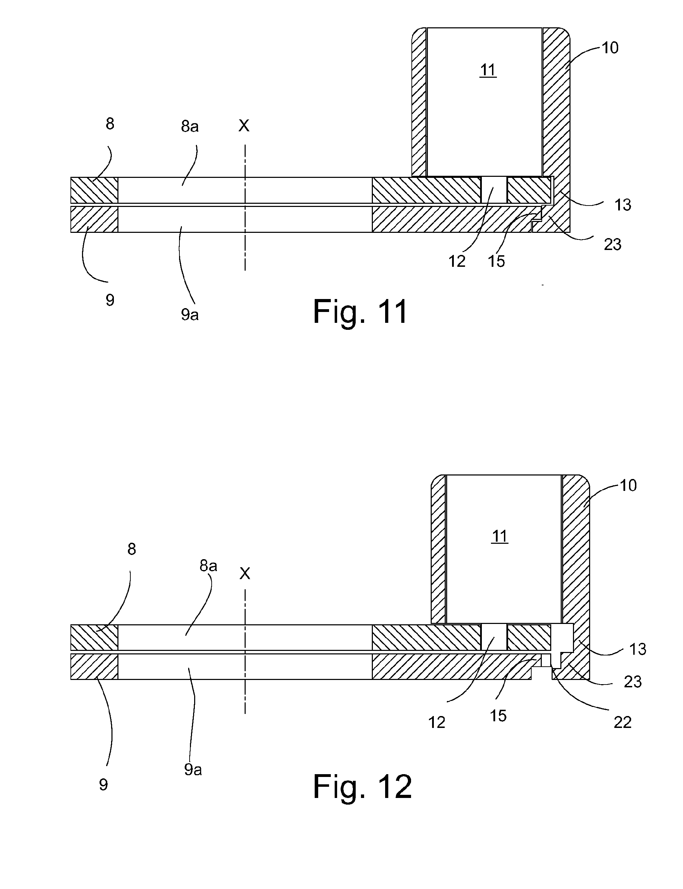

Fig. 9 - 12 show a second embodiment of the locking arrangement 7 according to the present invention which in mounted state also functions as a safeguard for preventing theft of the bicycle 1.

This second embodiment corresponds substantially to the first embodiment and functions by means of corresponding elements and components. The general function of the second embodiment will therefore not be described again, as well as the different elements of the locking arrangement are indicated with the same reference numerals as the elements of the first embodiment.

In the second embodiment the resistance against turning the lower mounting plate 9 in relation to the lock pin 12 is however not obtained by means of e.g. elevations and depressions 18 in a recess 17 as in the first embodiment.

Instead is a curved projection 15 on the lower mounting plate 9, which curved projection 15 has its centre situated on the axis of the stem 4 of the handlebars 2, formed with a row of teeth 22 or similar means cooperating with an opposite bead 23 formed integral with the housing 10 in the lower part of the groove 13.

The opposite bead 23 may moreover be placed at the middle of the row of teeth 22, seen in the situation in which the handlebars 2 of the bicycle 1 are not turned in relation to the frame 5,6 of the bicycle 1, or, said in other words, is in the zero position for riding the bicycle straight away.

The resistance against turning the lower mounting plate 9 in relation to the upper mounting plate 8 is in this second embodiment of the present invention generated when the teeth 22 on the lower mounting plate 9 is passing or engaging the opposite bead 23.

But contrary to the first embodiment the turning resistance can in the second embodiment be adjusted up and down in the following way.

The mounting housing 10 is placed on the upper mounting plate 8 so that the mounting housing 10 can slide to and fro into the direction of the axis X of the upper mounting opening 8a without at the same time being turned.

To that aspect are two vertical keys (not seen) engaging each there opposite longitudinal slot 26 formed in the upper mounting plate 8.

An oblong transverse slot 27 is furthermore formed in the upper mounting plate 8 while the adjusting pin 12 is placed eccentrically on the lock 11, and arranged for engaging the oblong transverse slot 27.

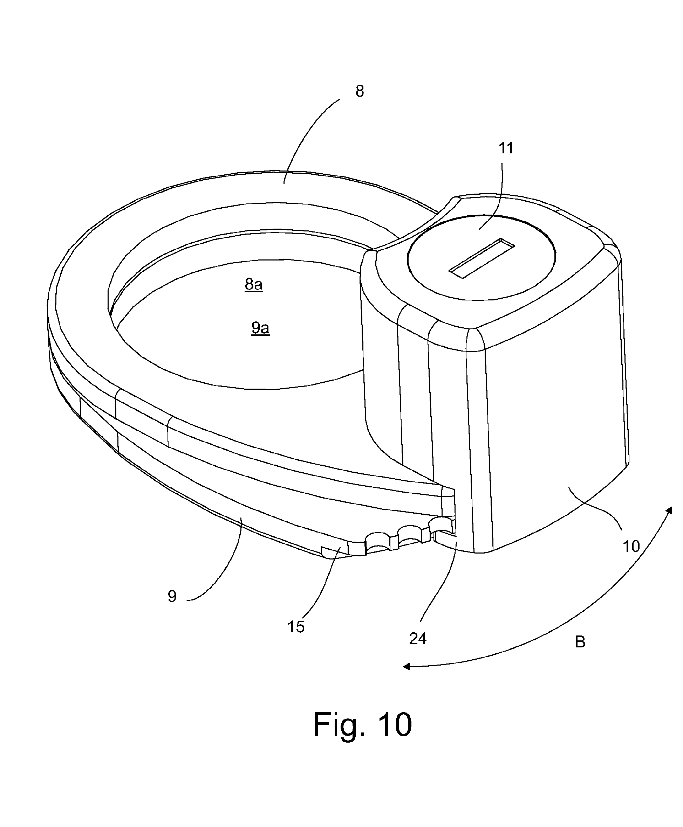

By simply turning the lock 11, as indicated by curved arrow B in fig. 10, when the adjusting pin 12 has engaged the oblong slot 27 can the mounting housing 10 now be placed in any desired position along the upper mounting plate 8.

That implies advantageously that the resistance against turning the lower mounting part 9 in relation to the upper mounting part 8 can be chosen in accordance with the intentions of the owner of the bicycle 1 by arranging the cooperating teeth 22 and bead 23 in a selected suitable way.

In a first position, in which the mounting house 10 is close to the front tube 6 of the bicycle 1, is the resistance therefore chosen to be so large that said turning can't take place. The bicycle 1 is brought into the non-riding mode in which the bicycle cannot in practice be stolen.

In a second position, in which the mounting house 10 is far from the front tube 6 of the bicycle 1, is the resistance on the other hand chosen to be zero so that the turning of the handle bar freely can take place. The bicycle is brought into the riding mode.

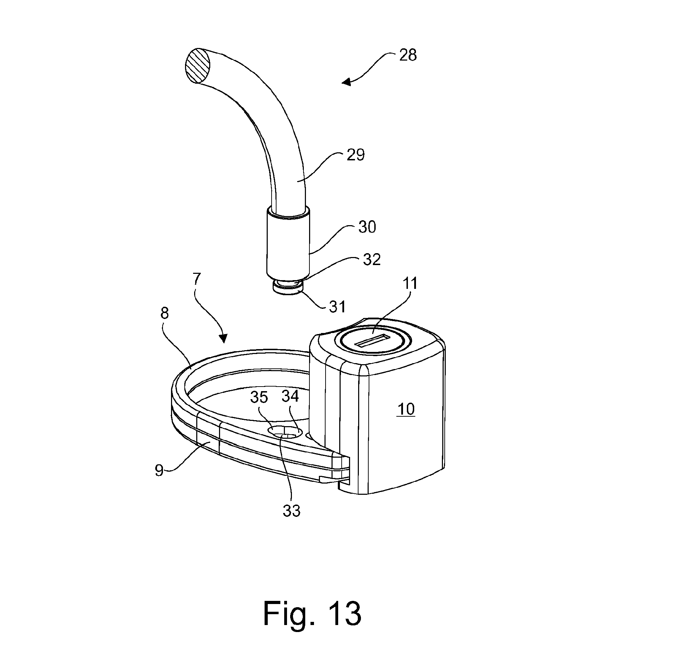

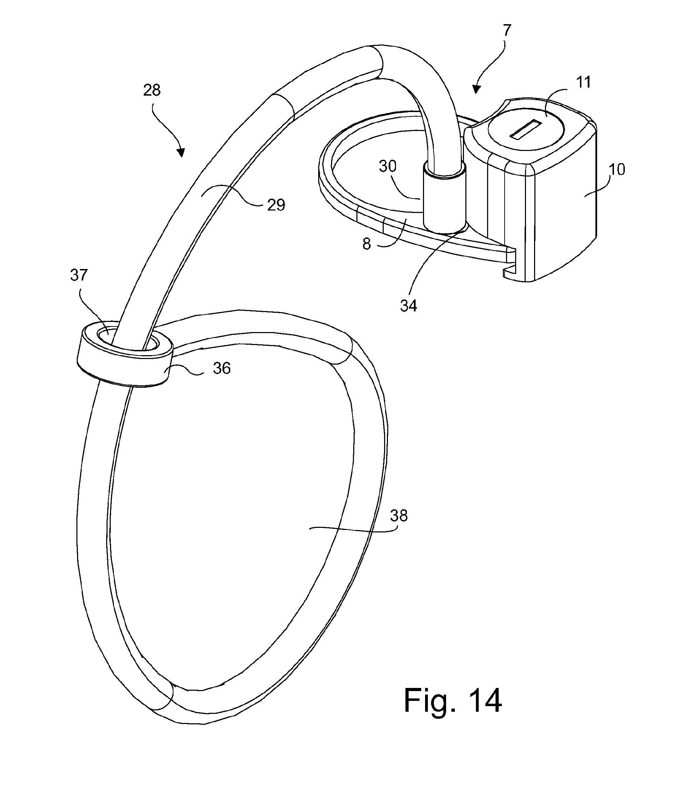

Fig. 13 and 14 show a third embodiment of the adjustment arrangement according to the invention including a cable lock arrangement.

From the previously mentioned International Patent Application no. WO 96/26102 is known a cable lock arrangement adapted to be connected to a theft safeguarding arrangement for a bicycle. More precisely is an engaging pin at the cable end in this case pushed through an upper opening in an upper mounting plate of the theft safeguarding arrangement and further through a lower opening in a lower mounting plate for finally being sideways displaced to a more narrow section of the lower opening whereby the desired connection is secured. The upper and lower mounting plates have however simultaneously been locked together with the consequence that the handlebars of the bicycle cannot be turned.

The known cable lock arrangement can therefore not be used in connection with the locking arrangement of the present invention since the handlebars of the bicycle according to the invention always is able to be turned different angles.

In fig. 13 is a fragment of the cable lock 28 seen in position for being assembled with the locking arrangement 7. Said cable lock 28 has a cable 29, which has an end equipped with a lock fitting 30 with an engaging pin 31 formed with a circumferential groove 32.

A cut-out section 33 in the upper mounting plate 8 of the locking arrangement 7 has a first opening 34 and a second opening 35, which first opening 34 is in communication with the second opening 35, and serve for receiving the engaging pin 31 when the cable lock 28 is locked to the locking arrangement 7. To allow this locking process to be carried properly out the cut-out section 33 is formed with the following dimensions.

The diameter of the first opening 34 is the same or larger than the diameter of the engaging pin 31. The diameter of the second opening 35 is the same or larger than the inner diameter of the circumferential groove 32. The total depth of the cut-out section 33 is the same or larger than the length of the engaging pin 31. The depth of the second opening 35 is the same or larger than the horizontal extensions of the circumferential groove 32. The width of the cut-out section 33 is so large that the circumferential groove 32 can enter the second opening 35 without being hindered of the upper wall (not seen) of the cut-out section 33.

Locking the cable 29 to the locking arrangement7 takes place in the following steps.

Pushing the engaging pin 31 down into the first opening 34 of the cut-out section 33 until the lower end face of the lock fitting 30 is abutting the upper face of the upper mounting plate 8.

Pushing the lock fitting 30 with the engaging pin 31 sideways into the second opening 35 in the cut-out section 33 until parts of the upper and lower walls of the groove 32 have passed some of the edge of the second opening 35 and possibly also some of the edge the first opening 34. In this position can the lock fitting 30 with the engaging pin 31 not be displaced perpendicular to the face of the upper mounting plate 8.

Pushing the mounting housing 10 in position on the upper face of the upper mounting plate 8 and fastening the housing 10 to the upper mounting plate 8 by displacing the lock 11 downwards so that the lock pin 12 (not seen) on the lock 11 via the through-bore 16 (not seen) in the upper mounting plate 8 is entering the curved recess 17 (not seen) in the lower mounting plate 9.

The geometry of the construction is adapted in such a way that the mounting housing 10 now is obstructing the engaging pin 31 from being withdrawn from the second opening 35. The engaging pin 31 of the cable lock 28 has effectively been secured to the locking arrangement 7.

This situation is seen in fig. 14 where the remainder of the cable 29 is seen too. In the opposite end of the cable 29 is the cable 29 equipped with a cable ring 36 or other suitable loop means. The cable 29 with the cable pin 31 has been pulled through the opening 37 in the cable ring 6 in such a way that a cable loop 38 is formed.

When using the cable lock in order to further securing the bicycle 1 against theft is the cable 29 with the engaging pin 31 first pulled around a stationary object like e.g. a lamppost (not seen) and/or through e.g. the front wheel (not seen) of the bicycle and then through the opening 37 in the cable ring 36, after which the engaging pin 31 of the cable lock 28 is secured to the locking arrangement 7, as explained above.

The present inventions can be used not only on bicycles or similar vehicles having a conventional visible mounting of the bearing of the front fork, but quite as well on similar vehicles having integral bearings or semi-integral bearings. Irrespective of which kind of bearing that are used the main function is to lock the bearing so at to make turning of the front wheel by means of the handlebars subject to overcoming a resistance provided to the bearing by fitting additional components to the bearing or making modifications to the already provided components of the bearings.

The recess is countersunk in the lower mounting part so that it is no longer possible to hit on the adjusting pin from below. Thus the new locking arrangements are much stronger than the old ones, and much more effort needs to be done to get unauthorised access to the vehicle.

## Claims

1. A locking arrangement for securing a vehicle (1) of the kind having at least two wheels against being stolen, said locking arrangement comprises,
- an upper mounting part (8) connected to a front tube (6) of the frame (5) of the vehicle (1),
- a lower mounting part (9) connected to a turnable axle (4) of a handlebars (2) of the vehicle (1),
- a mounting housing (10) on the upper mounting part (8),
- an adjusting pin (12), which is arranged displaceable up and down in the mounting housing (10), and
- adjusting means (17), which is formed in the lower mounting part (9) and is cooperating with the adjusting pin (12) in the mounting housing (10) in such a way that the vehicle (1) is in the non-riding mode when the adjusting pin (12) engages the adjusting means (17) and in the riding mode when the adjusting pin (12) does not engage the adjusting means (17),
**characterized in, that**
- at least parts of the surfaces of the adjusting pin (12) and/or the adjusting means (17) are touching each other when the adjusting pin (12) is engaging the adjusting means (17), and
- said surfaces parts are formed with means for generating resistance when the adjusting pin and the adjusting means are turned in relation to each other.

2. A locking arrangement according to claim 1, **characterized in, that**
- the adjusting means (17) is a curved recess (17) formed in the lower mounting part (9) with the centre of the curve situated on the axis of the turnable axle (4) of the handlebars (2),
- the upper and lower mounting parts (8,9) are cooperating in such a way with each other that the lower mounting part (9) is allowed to turn in relation to the stationary upper mounting part (8) about the axis of the axle (4) of the handlebars (2) while the adjusting pin (12) at the same time is engaging the recess (17), and
- the resistance means is generating a resistance against said turning.

3. A locking arrangement according to claim 2, **characterized in, that**
- the lower mounting part (9) is formed as a plate (9) with an at least mainly uniform thickness, and
- the depth of the recess (17) in the plate (9) is smaller than the thickness of the plate (9).

4. A locking arrangement according to any of the preceding claims 1, 2 or 3, **characterized in, that** the upper mounting part (8) is formed as a plate (8) with a mainly uniform thickness.

5. A locking arrangement according to any of the preceding claims 2 - 4, **characterized in, that** the resistance means comprises
- a row of elevations and depressions (18) formed one after the other on at least one of the side walls of the recess (17), and/or
- a row of elevations and depressions (18) formed one after the other on the bottom of the recess (17).

6. A locking arrangement according to any of the preceding claims 2 - 5, **characterized in, that** the resistance means comprises
- a friction lining on at least one of the side walls of the recess (17), and/or
- a friction lining on the bottom of the recess (17).

7. A locking arrangement according to any of the preceding claims 1 - 6, **characterized in, that** the resistance means comprises a friction lining on the adjusting pin (12).

8. A locking arrangement according to any of the preceding claims 1 - 7, **characterized in, that** the resistance means comprises that the lower end of the adjusting pin (12) is spherical.

9. A locking arrangement according to any of the preceding claims 2 - 8, **characterized in, that** the resistance means comprises a spring-loaded ball arranged between the lower end of the adjusting pin (12) and the bottom of the recess (17.

10. A locking arrangement according to claim 1, **characterized in, that**
- a transverse groove (13) is formed in the lower part of the mounting housing (10),
- the lower wall of the groove (13) is a flap (24),
- an adjusting bead (23) is formed in the groove (13),
- the mounting housing (10) and the upper mounting part (8) is arranged in such a way that the mounting housing (10) is able to be displaced to and fro on the upper mounting part (8) into the direction of the front tube (6) of the frame (5) of the vehicle (1),
- the lower mounting part (9) is formed with a projection (15) with a curved edge fitting into the groove (13) in the mounting housing (10),
- the centre of the curve of the edge of the projection (15) is situated on the axis of the axle (4) of the handlebars (2),
- the edge of the projection (15) is formed with a row of teeth (22) engaging more or less the bead (23) in the groove (13), and
- the upper and lower mounting parts (9) are cooperating in such a way with each other that turning the lower mounting part (9) in relation to the upper mounting part (8) generates resistance against said turning.

11. A locking arrangement according to claim 10, **characterized in, that** the locking arrangement comprises means as e.g. keys and slots (26) for preventing that the mounting housing (10) turns in relation to the upper mounting part (8) when the mounting housing (10) is displaced on the upper mounting part (8) to and fro the front tube (6) of the frame (5) of the vehicle (1).

12. A locking arrangement according to claim 10 or 11, **characterized in, that**
- the adjusting pin (12) is eccentric placed on a lock (11),
- an oblong slot (27) is formed in the upper mounting plate,
- the adjusting pin (12) is fitting into the slot (27), and
- the desired position of the mounting housing (10) on the upper mounting plate (8) is obtained by turning the lock (11).

13. A locking arrangement according to any of the preceding claims 10, 11 or 12, **characterized in, that** the locking arrangement is arranged so that the mounting housing (10) can be displaced on the upper mounting part (8) between a first position closer to and a second position farther from the front tube (6) of the vehicle (1) and that the resistance against turning the lower mounting part (9) in relation to the upper mounting part (8) is so large in the first position that a turning process cannot take place and in the second position so small or zero that a turning process freely can take place whereby the vehicle (1) is in the non-riding mode in the first position and in the riding mode in the second position.

14. A locking arrangement according to any of the preceding claims 1 - 13, **characterized in** further comprising a cable lock arrangement (28) including a cable (29) having an end equipped with a lock fitting (30) and an opposite end equipped with a hole for allowing passing of the lock fitting (30), which lock fitting is adapted for being locked together with the upper mounting plate (8).

15. A method of locking the cable (29) of the cable lock arrangement (28) of the locking arrangement according to any of the preceding claims 1 - 14, **characterized in, that** the method comprises the steps of
- pushing an engaging pin (31) of the lock fitting (30) down into a first opening (34) of a cut-out section (33) in the upper mounting plate (8) until a lower end face of the lock fitting (30) is abutting an upper face of the upper mounting plate (8),
- pushing the lock fitting (30) with the engaging pin (31) sideways into a second opening 35 in extension of the first opening (34) in the cut-out section (33), and
- pushing the mounting housing (10) in position on the upper face of the upper mounting plate (8) and fastening the mounting housing (10) to the upper mounting plate (8) by displacing the lock (11) downwards so that the lock pin (12) on the lock (11) via the through-bore (16) in the upper mounting plate (8) is entering the curved recess (17) in the lower mounting plate (9).
